# EUROPEAN PATENT APPLICATION

(11) **EP 3 306 965 A1**
(43) Date of publication of application: **11.04.2018**
(21) Application number: 15893096.6
(22) Date of filing: 15.10.2015
(51) Int. Cl.: H04W 4/24

(54) **CHARGING METHOD, COMMUNICATION PLATFORM, AND COMMUNICATION SYSTEM**

(30) Priority: 26.05.2015 CN 201510272659
(71) Applicant: ZTE Corporation, Shenzhen, Guangdong 518057 (CN)
(72) Inventor: ZHANG, Yabing, Shenzhen Guangdong 518057 (CN)
(74) Representative: Regimbeau
(86) International application number: PCT/CN2015/092035
(87) International publication number: WO 2016/188019

(57) **Abstract**

The present invention provides a charging method, a communication platform, and a communication system. The charging method includes: receiving subscription information of a subscriber, and allocating a virtual SIM card to the subscriber; acquiring subscriber use information; and calculating communication fees of the subscriber and a communication platform according to the subscriber use information and a charging rule. According to embodiments of the present prevention, virtual SIM cards is provided in a communication platform, and the communication platform allocates the virtual SIM cards to subscribers accessing the communication platform, so that the normal communication of the subscriber can be realized.

## Description

### TECHNICAL FIELD

The present invention relates to the field of communication fee managements, and in particular, to a charging method, a communication platform and a communication system.

### BACKGROUND

In the existing communication systems, a subscriber terminal directly accesses a communication operator, causing that the communication operator monopolizes charging and reducing the experience of the subscriber. If a third-party communication platform may be provided to supply a new communication option for the subscriber, the charge may be reduced to a certain extent, and hence good experience may be provided to the subscriber. However, there is no such a communication platform by now.

Therefore, there is an urgent need to those skilled in the art on how to provide a third-party communication platform and a corresponding charging method.

### SUMMARY

Embodiments of the present invention provide a charging method, a communication platform and a communication system to solve the problem that there is no third-party communication platform in the prior art.

Embodiments of the invention provide a charging method. In an embodiment, the charging method includes: receiving subscription information of a subscriber, and allocating a virtual subscriber identity module, SIM, card to the subscriber; acquiring subscriber use information; and calculating communication fees of the subscriber and a communication platform according to the subscriber use information and a charging rule.

In an embodiment of the invention, the calculating the communication fee of the subscriber includes: calculating the communication fee of the subscriber terminal according to the subscriber use information and a subscriber charging rule corresponding to the subscriber in the charging rule, comparing the communication fee of the subscriber terminal with a communication package subscribed in the subscription information, and managing the communication fee of the subscriber according to a comparison result.

In an embodiment of the invention, the managing the communication fee of the subscriber according to the comparison result includes: releasing the virtual SIM card allocated to the subscriber when the comparison result is that the communication package subscribed in the subscription information is used up.

In an embodiment of the invention, the calculating the communication fee of the communication platform includes: calculating platform use information of the virtual SIM card according to subscriber use information of all subscribers accessing the virtual SIM card, and calculating the communication fee of the virtual SIM card according to the platform use information of the virtual SIM card and a charging rule corresponding to the virtual SIM card in the charging rule.

In an embodiment of the invention, after calculating the communication fee of the virtual SIM card, the method further includes: calculating a remaining charge corresponding to the virtual SIM card according to the communication fee of the virtual SIM card and a communication package corresponding to the virtual SIM card; when the remaining charge is less than a subscription threshold, prompting the subscriber to subscribe a new communication package for the virtual SIM card; and when the remaining charge is zero, prompting the subscriber to subscribe a new communication package for the virtual SIM card and not allocating the virtual SIM card to the subscriber.

An embodiment of the invention provides a communication platform, which includes: a virtual subscriber identity module, SIM, card, an allocation module, an acquisition module and a charging module that access a communication operator, wherein, the allocation module is configured to receive subscription information of a subscriber and allocate a virtual SIM card to the subscriber; the acquisition module is configured to acquire subscriber use information; the charging module is configured to calculate communication fees of the subscriber and a communication platform according to the subscriber use information and a charging rule.

In an embodiment of the invention, the charging module includes a subscriber charging submodule, which is configured to calculate the communication fee of the subscriber terminal according to the subscriber use information and a subscriber charging rule corresponding to the subscriber in the charging rule, compare the communication fee of the subscriber terminal with a communication package subscribed in the subscription information, and manage the communication fee of the subscriber according to a comparison result.

In an embodiment of the invention, the subscriber charging submodule is further configured to notify the allocation module to release the virtual SIM card allocated to the subscriber when the comparison result is that the communication package subscribed in the subscription information is used up.

In an embodiment of the invention, the charging module includes a platform charging submodule, which is configured to calculate platform use information of the virtual SIM card according to subscriber use information of all subscribers accessing the virtual SIM card, and calculate the communication fee of the virtual SIM card according to the platform use information of the virtual SIM card and a charging rule corresponding to the virtual SIM card in the charging rule.

In an embodiment of the invention, the communication platform further includes a subscription module, and the platform charging submodule is further configured to: calculate a remaining charge corresponding to the virtual SIM card according to the communication fee of the virtual SIM card and a communication package corresponding to the virtual SIM card; when the remaining charge is less than a subscription threshold, prompt the subscriber via the subscription module to subscribe a new communication package for the virtual SIM card; and when the remaining charge is zero, prompt the subscriber via the subscription module to subscribe a new communication package for the virtual SIM card, and notify the allocation module not to allocate the virtual SIM card to the subscriber.

Also, an embodiment of the invention provides a communication system, which includes a subscriber terminal, a communication operator and a communication platform according to the invention.

The embodiments of the invention have the beneficial effects below:

In the communication platform and the charging method thereof according to the embodiments of the invention, a virtual SIM card is provided in a communication platform, and the communication platform allocates a virtual SIM card to a subscriber accessing the communication platform, so that the normal communication of the subscriber may be realized, moreover, simultaneous management on subscriber charge and platform charge may be accomplished according to a charging rule, and a third-party communication platform and a corresponding charging method may be provided, thereby solving the problem of charge monopoly of a communication operator due to the lack of a third-party communication platform in the prior art.

### BRIEF DESCRIPTION OF THE DRAWINGS

FIG. 1 is a structural schematic diagram of a communication platform according to a first embodiment of the invention;
FIG. 2 is a flow chart of a charging method according to a second embodiment of the invention; and
FIG. 3 is a flow chart of a charging method according to a third embodiment of the invention.

### DETAILED DESCRIPTION

The invention will be illustrated in detail in conjunction with the drawings and embodiments.

### First Embodiment

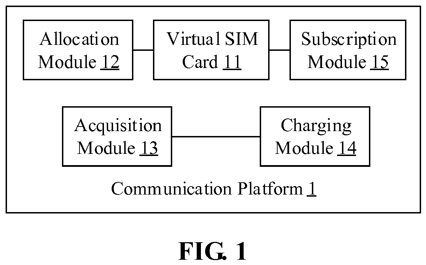

FIG. 1 is a structural schematic diagram of a communication platform according to a first embodiment of the invention. It may be seen from FIG. 1 that, in this embodiment, the communication platform 1 according to the invention includes: an allocation module 12, an acquisition module 13, a charging module 14 and a virtual SIM card 11 for accessing a communication operator.

The allocation module 12 is configured to receive subscription information of a subscriber and allocate a virtual SIM card to the subscriber.

The acquisition module 13 is configured to acquire subscriber use information.

The charging module 14 is configured to calculate communication fees of the subscriber and the communication platform according to the subscriber use information and a charging rule.

In some embodiments, the charging module 14 in the above embodiment includes a subscriber charging submodule, which is configured to calculate the communication fee of the subscriber terminal according to the subscriber use information and a subscriber charging rule corresponding to the subscriber in the charging rule, compare the communication fee of the subscriber terminal with a communication package subscribed in the subscription information, and manage the communication fee of the subscriber according to the comparison result.

In some embodiments, the subscriber charging submodule in the above embodiments is further configured to notify the allocation module 12 to release the virtual SIM card allocated to the subscriber when the comparison result indicates that the communication package subscribed in the subscription information is used up.

In some embodiments, the charging module 14 in the above embodiments includes a platform charging submodule, which is configured to calculate platform use information of the virtual SIM card according to the subscriber use information of all the subscribers accessing the virtual SIM card, and calculate the communication fee of the virtual SIM card according to the platform use information of the virtual SIM card and a charging rule corresponding to the virtual SIM card in the charging rule.

In some embodiments, as shown in FIG. 1, the communication platform 1 in the above embodiments further includes a subscription module 15. The platform charging submodule is further configured to: calculate a remaining charge corresponding to the virtual SIM card according to the communication fee of the virtual SIM card and a communication package corresponding to the virtual SIM card; when the remaining charge is less than a subscription threshold, prompt the subscriber via the subscription module 15 to subscribe a new communication package for the virtual SIM card; and when the remaining charge is zero, prompt the subscriber via the subscription module 15 to subscribe a new communication package for the virtual SIM card and notify the allocation module 12 not to allocate the virtual SIM card to the subscriber.

In some embodiments, the communication platform 1 in the above embodiments further includes a storage module, which is configured to storage data such as subscriber subscription information, platform subscription information and a charging rule, etc.

Also, the invention provides a communication system, which includes a subscriber terminal, a communication operator and a communication platform 1 according to the invention. The subscriber terminal is connected to the communication operator via the communication platform, the communication platform is provided with a virtual SIM card, and the communication platform manages the communication fee of the subscriber and the charging of the platform per se by managing the virtual SIM card.

In practical application, the charging rule in the communication platform includes a subscriber charging rule (various subscriber charging rules may be provided in practical application) provided by the platform to a subscriber, and a platform charging rule provided by the platform to a virtual SIM card, both of which may be the same or may be different from each other, in order to realize the diversity of subscriber charging rules. The communication platform may be utilized to manage Internet fees, short message fees and call fees, etc., of a subscriber. For example, the Internet fees are managed via accumulative data, the short message fees are managed via accumulative number of times, and the call fees are managed via accumulative time, and the like. Thus, a subscriber may select to pay in an all-inclusive manner for total data /total number of times/total time, and the subscriber will not be affected by the Internet data, number of short messages and call duration used in each month, thereby providing better experience to the subscriber.

In practical application, the subscriber charging rule may include different consumption modes, and a subscriber may select different consumption modes as required. The charging module 14 in the platform may perform the management to different consumption modes as following.

In some embodiments, the consumption mode includes charging based on the data /the number of times. The charging module 14 is configured to calculate the remaining data /number of times of each subscriber according to the accumulative data /number of times in the subscriber use information and the total data /number of times subscribed by the subscriber, determine whether to release the virtual SIM card accessed by the subscriber terminal depending on whether the remaining data /number of times is zero, and notify the corresponding subscriber terminal to release the accessed virtual SIM card when the remaining data /number of times is zero.

In some embodiments, the consumption mode includes charging based on the time. The charging module 14 is configured to calculate the remaining time of each subscriber according to the start time and the current time in the subscriber use information and the subscribed total time, and determine whether to release the virtual SIM card accessed by the subscriber terminal according to whether the remaining time period is zero, and notify the corresponding subscriber terminal to release the accessed virtual SIM card when the remaining time period is zero. Or, the charging module 14 is configured to calculate the remaining time in the communication fee of the virtual SIM card according to the accumulative use time in the use information and the subscribed total time, determine whether to release the virtual SIM card accessed by the subscriber terminal depending on whether the remaining time period is zero, and notify the corresponding subscriber terminal to release the accessed virtual SIM card when the remaining time period is zero.

### Second Embodiment:

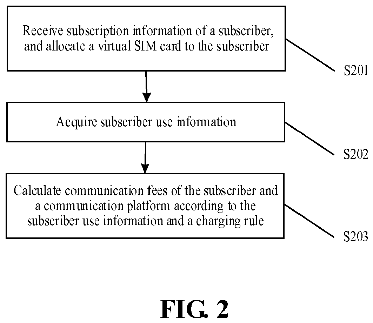

FIG. 2 is a flow chart of a charging method according to a second embodiment of the invention. It may be seen from FIG. 2 that, in this embodiment, the charging method according to the invention includes the steps below.
S201: Subscription information of a subscriber is received, and a virtual SIM card is allocated to the subscriber.
S202: Subscriber use information is acquired.
S203: Communication fees of the subscriber and a communication platform are calculated according to the subscriber use information and a charging rule.

In some embodiments, the calculating the communication fee of the subscriber includes: the communication fee of the subscriber terminal is calculated according to the subscriber use information and a subscriber charging rule corresponding to the subscriber in the charging rule, the communication fee of the subscriber terminal is compared with a communication package subscribed in the subscription information, and the communication fee of the subscriber is managed according to the comparison result.

In some embodiments, the managing the communication fee of the subscriber according to the comparison result includes: the virtual SIM card allocated to the subscriber is released when the comparison result indicates that the communication package subscribed in the subscription information is used up.

In some embodiments, the calculating the communication fee of the communication platform includes: platform use information of the virtual SIM card is calculated according to the subscriber use information of all the subscribers accessing the virtual SIM card, and the communication fee of the virtual SIM card is calculated according to the platform use information of the virtual SIM card and a charging rule corresponding to the virtual SIM card in the charging rule.

In some embodiments, after calculating the communication fee of the virtual SIM card, the method further includes: a remaining charge corresponding to the virtual SIM card is calculated according to the communication fee of the virtual SIM card and a communication package corresponding to the virtual SIM card; when the remaining charge is less than a subscription threshold, the subscriber is prompted to subscribe a new communication package for the virtual SIM card; and when the remaining charge is zero, the subscriber is prompted to subscribe a new communication package for the virtual SIM card and the virtual SIM card is no longer allocated to the subscriber.

The invention will be illustrated in conjunction with specific application examples.

### Third embodiment:

In this embodiment, the invention will be illustrated in an example in which the communication platform is used for managing the Internet data of subscribers and is provided with a plurality of virtual SIM cards, and the subscriber terminals a and b access the communication platform.

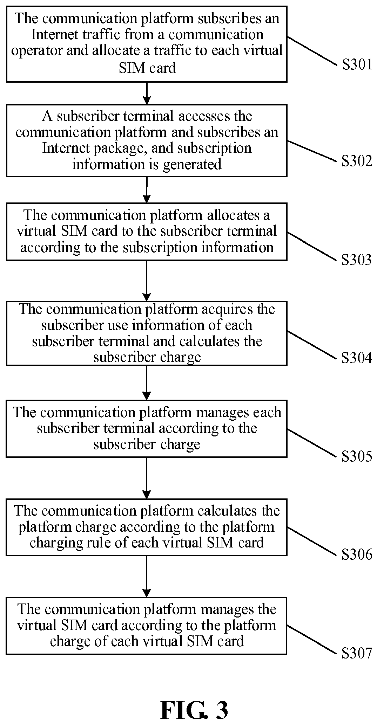

FIG. 3 is a flow chart of a charging method according to a third embodiment of the invention. It may be seen from FIG. 3 that, in this embodiment, the charging method according to the invention includes the steps below.
S301: The communication platform subscribes Internet data from a communication operator and allocates data to each of the virtual SIM card.

For example, a third-party operator subscribes the data from the traditional communication operator via the communication platform, stores the subscribed data package information, and allocates 1G data to the virtual SIM card 1 and the virtual SIM card 2 respectively.
S302: A subscriber terminal accesses the communication platform and subscribes an Internet package, and subscription information is generated.

For example, the subscriber terminal a accesses the communication platform and subscribes the 1G data (one consumption mode in the subscriber charging rule); the subscriber terminal b accesses the communication platform and subscribes a network time length of 3 months, in which no total data is calculated (one consumption mode in the subscriber charging rule). The subscriber terminal may be distinguished from the virtual SIM card via a telephone number, an International Mobile Subscriber Identity (IMSI) number or an International Mobile Equipment Identity (IMEI) number, etc.
S303: The communication platform allocates a virtual SIM card to the subscriber terminal according to the subscription information.

For example, the communication platform allocates a virtual SIM card 1 to the subscriber terminal a and allocates a virtual SIM card 2 to the subscriber terminal b.
S304: The communication platform acquires the subscriber use information of each subscriber terminal and calculates the subscriber charge according to the subscriber use information and the subscriber charging rule.

The subscriber terminal sends the respective subscriber use information to each communication platform periodically/in real time, and the communication platform acquires the subscriber use information, such as accumulative use data, accumulative use time and start use time, etc., of each subscriber terminal periodically/in real time, and calculates the charge status of the subscriber terminal according to the subscriber use information and the subscriber charging rule corresponding to each subscriber terminal. Specifically, the example is given as follows.

For the subscriber terminal a, the consumption mode thereof is charging based on the data /number of times, then an accumulative data A of the subscriber terminal a is acquired in real time, and the remaining data of the subscriber terminal a is calculated according to the value of accumulative data A in the use information and the total amount of 1G data subscribed by the subscriber, and the charge status of the subscriber terminal a is determined according to whether the remaining data is zero.

For the subscriber terminal b, the consumption mode thereof is charging based on time, then it is acquired periodically of the start time and the current time in the use information of the subscriber terminal b and the total time of 3 months subscribed by the subscriber terminal b, the remaining time of the subscriber terminal b is calculated, and the charge status of the subscriber terminal b is determined according to whether the remaining time is zero.
S305: The communication platform manages each subscriber terminal according to the subscriber charge.

The communication platform manages the corresponding subscriber terminal according to the charge status of each subscriber terminal. Specifically, the example is given as follows.

For the subscriber terminal a, when the remaining data /number of times is zero, the communication platform notifies the subscriber terminal a that the remaining data thereof is zero, requires the subscriber to subscribe again and releases the virtual SIM card 1 allocated to the subscriber terminal a.

For the subscriber terminal b, when the remaining time is zero, the communication platform notifies the subscriber terminal b that the remaining time thereof is zero, requires the subscriber to subscribe again and releases the virtual SIM card 2 allocated to the subscriber terminal b.
S306: The communication platform calculates the platform charge according to the platform charging rule of each virtual SIM card.

The communication platform acquires the subscriber use information, such as accumulative use data, etc., of each subscriber terminal periodically/in real time, then calculates the use information of the virtual SIM card according to the subscriber use information of all subscriber terminals of each virtual SIM card, and then calculates the platform charge according to the platform charging rule.

Specifically, for example, for the virtual SIM card 1 and the virtual SIM card 2, the platform use information is calculated according to the subscriber use information of all the subscriber terminals accessing each virtual SIM card, a communication fee of the virtual SIM card is calculated according to the platform use information of the virtual SIM card and the platform charging rule provided for the virtual SIM card in the charging rule, the remaining charge corresponding to the virtual SIM card is calculated according to the communication fee of the virtual SIM card and the communication package corresponding to the virtual SIM card, and the virtual SIM card is managed according to the remaining charge and the charge status is determined. When the remaining charge is less than a subscription threshold and is not zero, a new communication package is subscribed for the virtual SIM card, and when the remaining charge is zero, no new subscriber terminal will be accessed to the virtual SIM card.

For example, when only 200M of the data allocated by the platform to the virtual SIM card 1 is left, which is less than the subscription threshold (may be configured autonomously), a new data package of 1G may be subscribed for the virtual SIM card 1, and if the data allocated by the platform to the virtual SIM card 2 is zero, no new subscriber terminal will be accessed to the virtual SIM card 2.
S307: The communication platform manages the virtual SIM card according to the platform charge of each virtual SIM card.

The management on the virtual SIM card by the communication platform includes: subscription and allocation of a new charge. Specifically, the example is given as follows.

For the virtual SIM card 1, when only 200M of the data allocated by the platform to the virtual SIM card 1 is left, which is less than the subscription threshold (may be configured autonomously), the third-party the platform may be reminded to subscribe a new data package of 1G for the virtual SIM card 1 from the communication operator in order to guarantee the use experience of the subscriber and avoid disconnection of Internet, etc.

For the virtual SIM card 2, when the data allocated by the platform to the virtual SIM card 2 is zero, the third-party platform may be reminded to subscribe a new data package for the virtual SIM card 2 from the communication operator, in order to guarantee the use experience of the subscriber and avoid disconnection of Internet, etc., and no new subscriber terminal will be allocated to the virtual SIM card 2.

In practical application, the communication platform may implemented by software provided in the communication operator, etc.

The invention has at least the beneficial effects below.

Virtual SIM cards is provided in a communication platform, and the communication platform allocates the virtual SIM cards to subscribers accessing the communication platform, so that the normal communication of the subscriber can be realized. Furthermore, simultaneous management on subscriber charge and platform charge can be accomplished according to the charging rule, and a third-party communication platform and a corresponding charging method can be provided to solve the problem of charge monopoly of a communication operator caused by the lack of a third-party communication platform in the prior art, and hence improving the user experience.

The above description only shows some specific embodiments of the invention, rather than limiting the invention in any forms. All simple modifications, equivalent variations, combinations or decorations to the above embodiments based on the essence of the invention will pertain to the protection scope of the solutions of the invention.

### Industrial Applicability

The communication platform and the charging method thereof according to the embodiments of the invention may be applied to a charging process. Virtual SIM cards is provided in a communication platform, and the communication platform allocates the virtual SIM cards to subscribers accessing the communication platform, so that the normal communication of the subscriber can be realized. Furthermore, simultaneous management on subscriber charge and platform charge can be accomplished according to the charging rule, and a third-party communication platform and a corresponding charging method can be provided to solve the problem of charge monopoly of a communication operator caused by the lack of a third-party communication platform in the prior art.

## Claims

1. A charging method, comprising:
receiving subscription information of a subscriber, and allocating a virtual subscriber identity module, SIM, card to the subscriber;
acquiring subscriber use information; and
calculating communication fees of the subscriber and a communication platform according to the subscriber use information and a charging rule.

2. The charging method as claimed in claim 1, wherein, the calculating the communication fee of the subscriber comprises:
calculating the communication fee of a subscriber terminal according to the subscriber use information and a subscriber charging rule corresponding to the subscriber in the charging rule,
comparing the communication fee of the subscriber terminal with a communication package subscribed in the subscription information, and
managing the communication fee of the subscriber according to a comparison result.

3. The charging method as claimed in claim 2, wherein, the managing the communication fee of the subscriber according to the comparison result comprises:
releasing the virtual SIM card allocated to the subscriber when the comparison result indicates that the communication package subscribed in the subscription information is used up.

4. The charging method as claimed in any one of claims 1 to 3, wherein, the calculating the communication fee of the communication platform comprises:
calculating platform use information of the virtual SIM card according to subscriber use information of all subscribers accessing the virtual SIM card, and
calculating a communication fee of the virtual SIM card according to the platform use information of the virtual SIM card and a platform charging rule corresponding to the virtual SIM card in the charging rule.

5. The charging method as claimed in claim 4, wherein, after calculating the communication fee of the virtual SIM card, the method further comprises:
calculating a remaining charge corresponding to the virtual SIM card according to the communication fee of the virtual SIM card and a communication package corresponding to the virtual SIM card;
prompting the subscriber to subscribe a new communication package for the virtual SIM card when the remaining charge is less than a subscription threshold; and
prompting the subscriber to subscribe a new communication package for the virtual SIM card and not allocating the virtual SIM card to the subscriber when the remaining charge is zero.

6. A communication platform, comprising: an allocation module, an acquisition module, a charging module and a virtual subscriber identity module, SIM, card configured for accessing a communication operator, wherein
the allocation module is configured to receive subscription information of a subscriber and allocate the virtual SIM card to the subscriber;
the acquisition module is configured to acquire subscriber use information; and
the charging module is configured to calculate communication fees of the subscriber and a communication platform according to the subscriber use information and a charging rule.

7. The communication platform as claimed in claim 6, wherein the charging module comprises a subscriber charging submodule, and the subscriber charging submodule is configured to:
calculate the communication fee of a subscriber terminal according to the subscriber use information and a subscriber charging rule corresponding to the subscriber in the charging rule,
compare the communication fee of the subscriber terminal with a communication package subscribed in the subscription information, and
manage the communication fee of the subscriber according to a comparison result.

8. The communication platform as claimed in claim 7, wherein the subscriber charging submodule is further configured to notify the allocation module to release the virtual SIM card allocated to the subscriber when the comparison result indicates that the communication package subscribed in the subscription information is used up.

9. The communication platform as claimed in any one of claims 6 to 8, wherein the charging module comprises a platform charging submodule which is configured to:
calculate platform use information of the virtual SIM card according to subscriber use information of all subscribers accessing the virtual SIM card, and
calculate a communication fee of the virtual SIM card according to the platform use information of the virtual SIM card and a platform charging rule corresponding the virtual SIM card in the charging rule.

10. The communication platform as claimed in claim 9, further comprising a subscription module, and the platform charging submodule is further configured to:
calculate a remaining charge corresponding to the virtual SIM card according to the communication fee of the virtual SIM card and a communication package corresponding to the virtual SIM card,
prompt the subscriber via the subscription module to subscribe a new communication package for the virtual SIM card when the remaining charge is less than a subscription threshold, and
prompt the subscriber via the subscription module to subscribe a new communication package for the virtual SIM card and notify the allocation module not to allocate the virtual SIM card to the subscriber when the remaining charge is zero.

11. A communication system, comprising: a subscriber terminal, a communication operator, and the communication platform as claimed in any one of claims 6 to 10.
